# FASCICULE DE BREVET EUROPEEN

(11) **EP 2 602 232 B1**
(45) Date de publication et mention de la délivrance du brevet: **03.05.2017**
(21) Numéro de dépôt: 12196161.9
(22) Date de dépôt: 07.12.2012
(51) Int. Cl.: C03B 11/10, C03B 11/12

(54) **PROCÉDÉ ET DISPOSITIF DE FABRICATION D'UN ARTICLE EN VERRE CREUX**
VERFAHREN UND VORRICHTUNG ZUR HERSTELLUNG EINES ARTIKELS AUS HOHLGLAS
METHOD AND DEVICE FOR MANUFACTURING A HOLLOW GLASS ITEM

(30) Priorité: 09.12.2011 FR 1161398
(43) Date de publication de la demande: 12.06.2013
(60) Demande divisionnaire: 17156399.2
(73) Titulaire: Pochet du Courval, 75010 Paris (FR)
(72) Inventeur: Lequien, Jany, 76340 Hodeng au Bosc (FR); Froissart, Pascal, 80430 Neuville Coppegueule (FR); Baliteau, Sébastien, 80220 Bouttencourt (FR)
(74) Mandataire: Derambure, Christian

(56) Documents cités:
- EP-A2- 1 656 859
- JP-A- 2003 095 671
- US-A1- 2003 026 924

## Description

La présente invention concerne un procédé et un dispositif de fabrication d'un article en verre creux comprenant notamment un fond et des parois latérales, comme par exemple un flacon ou un pot.

L'invention concerne également un poinçon de formage direct d'un tel article en verre creux.

Les articles en verre creux peuvent être fabriqués selon plusieurs procédés.

L'un de ces procédés consiste à déposer dans une empreinte d'un moule au moins une goutte de verre, également appelée paraison. Cette empreinte a une forme interne qui correspond sensiblement à la forme externe de l'article.

Ensuite, un poinçon est introduit dans l'empreinte du moule de façon à donner à l'article sensiblement sa forme définitive.

A titre d'exemple, l'article peut avoir une forme extérieure rectangulaire ou carrée et une forme intérieure conique par l'intermédiaire du poinçon. Ainsi, JP 2003/095,671 décrit un article en verre dont la forme intérieure est conique non régulière, étant étagée en gradins.

Or, certains utilisateurs de ce type d'article en verre, notamment dans le domaine de la parfumerie ou de la cosmétique, cherchent à personnaliser ces articles en réalisant des décors en relief et/ou en creux à l'intérieur, rappelant ou suggérant la marque et/ou le produit contenu dans les articles. Le ou les décor(s) à l'intérieur peuvent être indépendant(s) de la forme de l'article et ces motifs peuvent avoir toutes les formes désirées. Par exemple, dans un domaine qui n'est pas celui de la parfumerie ou la cosmétique, EP 1 656 859 décrit un verre pour boisson dans le fond duquel est réalisé un motif représentant un ballon de football.

L'invention a pour but de proposer un procédé et un dispositif de fabrication d'un article en verre creux permettant de réaliser ce type d'intervention à l'intérieur de ces articles.

L'invention a donc pour objet un procédé de fabrication d'un article en verre creux, comme par exemple un flacon ou un pot, caractérisé en ce qu'il consiste en les étapes suivantes :
- on dépose dans une empreinte d'un moule au moins une goutte de verre,
- on introduit dans l'empreinte un poinçon,
- on forme au moyen de ce poinçon l'article en verre et simultanément on imprime sur une face interne d'au moins une paroi dudit article au moins un motif en relief et/ou en creux,
- on retire le poinçon de l'empreinte du moule, et
- on démoule l'article en verre comportant ledit au moins un motif interne en relief et/ou en creux.

Il est aussi décrit un poinçon de formage direct d'un article en verre creux, comme par exemple un flacon ou un pot, comprenant un corps comprenant une partie d'extrémité de forme générale tronconique, la partie d'extrémité comportant sur au moins une face latérale externe au moins un motif en relief et/ou en creux. Le poinçon comprend une ou plusieurs des caractéristiques suivantes, prises isolément ou suivant toutes les combinaisons techniquement possibles :
- le motif en relief et/ou en creux présente une forme localement en contre-dépouille,
- la partie d'extrémité comporte un angle de dépouille compris entre 2 degrés et 15 degrés, de préférence de l'ordre de 5 degrés.

L'invention a aussi pour objet un dispositif de fabrication d'un article en verre creux, comme par exemple un flacon ou un pot, pour la mise en oeuvre du procédé tel que précédemment mentionné, caractérisé en ce qu'il comprend :
- un moule comportant une empreinte de forme correspondant sensiblement à la forme extérieure de l'article en verre, et
- un poinçon tel que défini ci-dessus, le poinçon étant déplaçable entre une position passive à l'extérieur de l'empreinte et une position active à l'intérieur de ladite empreinte.

Suivant un autre aspect avantageux de l'invention, le dispositif de fabrication comprend la caractéristique suivante :
- le motif en relief et/ou en creux présente une forme localement en contre-dépouille propre à conférer une forme en contre-dépouille complémentaire au verre destiné à former l'article en verre.

Les caractéristiques et avantages de l'invention apparaîtront au cours de la description qui va suivre, donnée à titre d'exemple et faite en référence aux dessins annexés, sur lesquels :
- la figure 1 est une vue schématique en élévation d'un article en verre creux, comme par exemple un pot, obtenu par le procédé de fabrication, conforme à l'invention,
- la figure 2 est une vue en perspective d'un poinçon de formage direct, conforme à l'invention,
- la figure 3 est une vue schématique en perspective et en coupe verticale d'un dispositif de fabrication d'un article en verre creux avec le poinçon de formage en position passive, et
- la figure 4 est une vue schématique en perspective et en coupe verticale du dispositif de fabrication avec le poinçon de formage en position active.

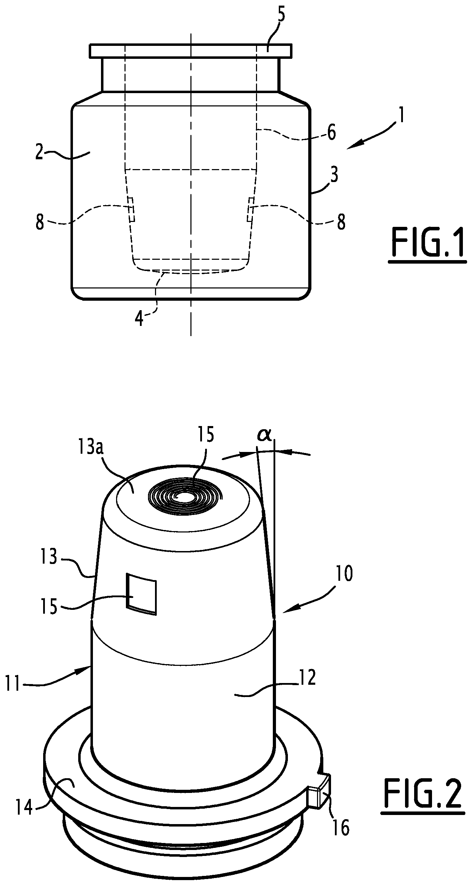

Sur la figure 1, on a représenté schématiquement un article en verre creux, comme par exemple un pot, désigné par la référence générale 1 et qui présente, dans cet exemple, une forme générale cylindrique. Cet article 1 comporte un corps 2 creux déterminant un contenant délimité par une paroi cylindrique 3 et un fond 4. Le corps 2 comporte une partie supérieure opposée au fond 4, munie d'une bague 5.

Dans l'exemple de réalisation représenté à la figure 1, le creux interne du corps 2 de l'article 1 comporte une face interne 6 et ce creux présente une forme générale sensiblement tronconique.

Le creux du corps 2 peut avoir toute autre forme, comme par exemple carrée, rectangulaire ou ovale. Dans le cas d'un creux présentant une forme carrée ou rectangulaire, l'article en verre 1 présente plusieurs parois latérales comportant chacune une face interne.

Ainsi que montré à la figure 1, la face interne 6 de la paroi 3 du corps 2 comporte au moins un motif 8 en relief et/ou en creux imprimé dans le verre de l'article 1.

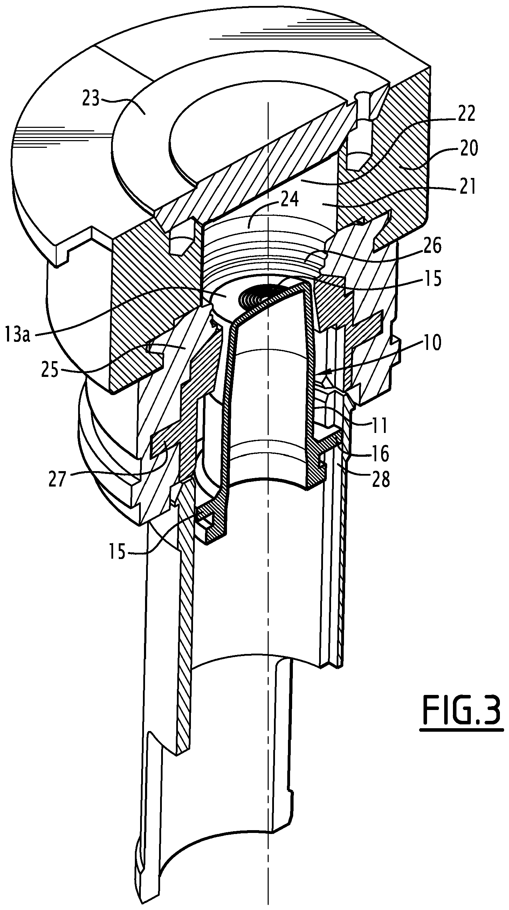

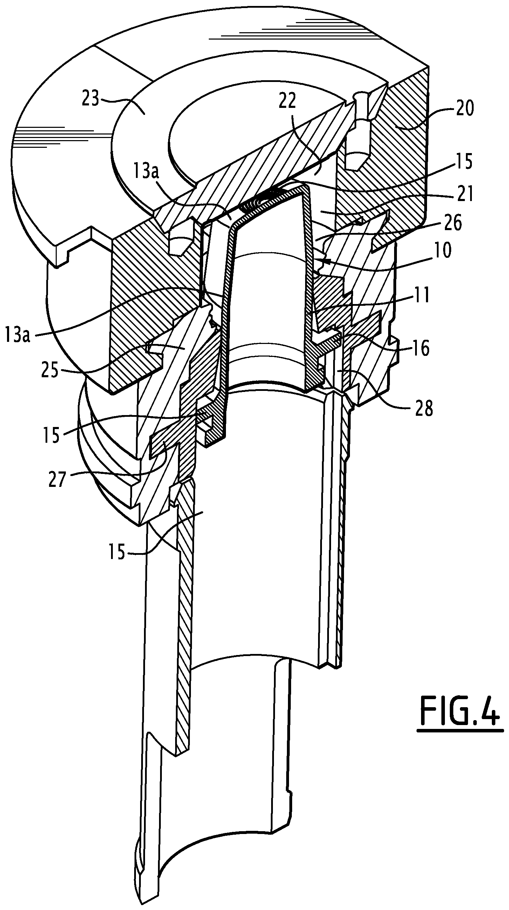

L'article en verre 1 est formé par un poinçon 10 représenté à la figure 2 et dans un dispositif de fabrication désigné par la référence générale 20 et représenté sur les figures 3 et 4.

D'une manière générale, le corps 11 du poinçon 10 comporte une forme extérieure correspondant sensiblement à la forme du creux à obtenir dans l'article 1. Cette forme peut être rectangulaire, carrée ou ovoïde ou toute autre forme appropriée.

Le corps 11 du poinçon 10 comporte, dans l'exemple de réalisation représenté à la Fig. 2, une première partie 12 sensiblement cylindrique et une seconde partie 13 dite partie d'extrémité, prolongeant la première partie 12.

La partie d'extrémité 13 est de section progressivement décroissante vers une paroi d'extrémité 13a. La partie d'extrémité 13 présente une forme générale tronconique se terminant par la paroi d'extrémité 13a.

Cette partie d'extrémité 13 présente une forme générale comportant un angle de dépouille α compris entre 2 degrés et 15 degrés, de préférence un angle de dépouille α compris entre 2 degrés et 10 degrés, et de manière encore plus préférée un angle de dépouille α de l'ordre de 5 degrés par rapport à l'axe de la partie d'extrémité 13.

La partie d'extrémité 13 du corps 11 du poinçon 10 comporte sur sa face latérale externe au moins un motif 15 en relief et/ou en creux destiné à former ledit au moins un motif 8 en relief et/ou en creux sur la face interne 6 de la paroi 3 lors du formage de l'article 1. Un motif 15 en relief et/ou en creux peut également être prévu sur la paroi d'extrémité 13a du corps 11.

Par « en relief et/ou en creux », on entend que le motif 15 est en relief et/ou en creux, ou bien présente au moins un relief et au moins un creux.

Le motif 15 en relief et/ou en creux présente une forme localement en contre-dépouille, c'est-à-dire au moins une surface dont la normale est orientée à l'opposé de la paroi d'extrémité 13a.

Ainsi, localement, au niveau de la contre-dépouille, le motif est de section progressivement croissante vers la paroi d'extrémité 13a.

Lorsque l'ébauche d'un article en verre fondu vient surmouler le poinçon 10, l'ébauche présente à l'endroit du motif 15 une forme en contre-dépouille complémentaire de celle du motif 15. Malgré la forme en contre-dépouille complémentaire de l'ébauche, le démoulage d'une telle ébauche reste possible, car l'ébauche présente une certaine élasticité, du fait de la malléabilité du verre fondu.

Le motif 15 en relief et/ou en creux se superpose à la forme générale tronconique de la partie d'extrémité 13.

Le corps 11 du poinçon 10 comporte une bague de guidage 14.

Le dispositif de fabrication de l'article en verre 1 comprend, comme montré sur les figures 3 et 4, un moule 20 comportant une empreinte 21 de forme correspondant sensiblement à la forme extérieure de l'article 1 en verre.

De manière habituelle, le moule 20 comporte à sa partie supérieure un orifice 22 d'introduction d'au moins une goutte de verre. Cet orifice 22 est obturé par un fond 23 contre lequel est formé le fond 4 de l'article 1. Le moule 20 comporte à sa partie inférieure un orifice 24 pour le passage du poinçon 10, ainsi qu'on le verra ultérieurement.

Le moule 20 comporte également au-dessous de l'orifice 24, un moule de bague 25 destiné à former la bague 5 de l'article 1. Ce moule de bague 25 est muni d'un orifice central 26 pour le passage du poinçon 10. Le moule de bague 25 porte intérieurement un manchon 27 de guidage du poinçon 10 déplaçable entre une position passive représentée à la figure 3 et dans laquelle la paroi d'extrémité 13a du poinçon 10 obture l'orifice central 26 et une position active représentée à la figure 4 et dans laquelle le poinçon 10 est en saillie dans l'empreinte 21 du moule 20 afin de former l'article 1.

Le manchon de guidage 27 comporte intérieurement une rainure verticale 28 coopérant avec un ergot 16 ménagé à la périphérie de la bague 14 du poinçon 10 et destinée à positionner ce poinçon 10 pour imprimer ledit au moins un motif 15 en relief et/ou en creux à l'endroit choisi sur la face interne 6 de la paroi 3 de l'article 1.

Le poinçon 10 peut comporter intérieurement un élément de refroidissement, comme par exemple une buse, non représentée.

Pour réaliser l'article en verre 1, on procède de la façon suivante.

Tout d'abord et après avoir retiré le fond 23 du moule 20, on dépose dans l'empreinte 21 au moins une goutte de verre fondu, cette empreinte 21 étant obturée à sa partie inférieure par la paroi d'extrémité 13a du poinçon 10, comme montré à la figure 3.

Ensuite, on replace le fond 23 sur le moule 20 et on actionne par des moyens appropriés de type connu, le poinçon 10 qui se déplace entre la position passive représentée à la figure 3 et la position active représentée à la figure 4 et dans laquelle le poinçon 10 est en saillie à l'intérieur de l'empreinte 21 du moule 20.

Ainsi, le poinçon 10 en pénétrant dans l'empreinte 21 forme l'article en verre 1 en lui donnant sa forme extérieure et sa forme intérieure. Simultanément, le poinçon 10 imprime sur une face intérieure 6 de la paroi 3 du flacon 1 au moins un motif 8 en relief et/ou en creux par l'intermédiaire d'au moins un motif 15 en relief et/ou en creux ménagé sur le corps 11 du poinçon 10.

Dans l'exemple de réalisation des figures 1 et 2, le poinçon 10 imprime sur une face latérale intérieure de la paroi 3 du flacon 1 au moins un motif 8 en relief et/ou en creux par l'intermédiaire d'au moins un motif 15 en relief et/ou en creux ménagé sur la face latérale externe de la partie d'extrémité 13 du corps 11 du poinçon 10.

Lors de l'impression sur une face latérale intérieure de la paroi 3 du flacon 1 d'au moins un motif 8 en relief et/ou en creux, le motif 15 confère une forme de contre-dépouille au verre fondu destiné à former l'article en verre 1. Cette forme en contre-dépouille constitue l'ébauche du motif 8 en relief et/ou en creux de l'article en verre 1.

Bien évidemment, les formes extérieure et intérieure du corps 2 de l'article en verre 1 peuvent être différentes de celles représentées à la figure 1.

Ensuite, on retire le poinçon 10 en le ramenant dans sa position passive par un déplacement axial et on démoule l'article en verre 1. On constate que lors du retrait du poinçon 10, l'article en verre se déforme élastiquement pour permettre le passage du motif 15, puis l'article en verre reprend sa forme laissant apparaître le motif 8.

Le dispositif selon l'invention permet en une seule opération de former l'article en verre creux et d'imprimer sur une face interne d'au moins une paroi dudit article au moins un motif en relief et/ou en creux.

## Revendications

1. Procédé de fabrication d'un article en verre (1) creux, comme par exemple un flacon ou un pot, **caractérisé en ce qu'**il consiste en les étapes suivantes :
- on dépose dans une empreinte (21) d'un moule (20) au moins une goutte de verre,
- on introduit dans l'empreinte (21) du moule (20) un poinçon (10) comportant au moins un motif (15) en relief et/ou en creux présentant une forme localement en contre-dépouille,
- on forme au moyen de ce poinçon (10) l'article en verre (1) et simultanément on imprime sur une face interne (6) d'au moins une paroi (3) dudit article (1) au moins un motif (8) en relief et/ou en creux formé par l'au moins un motif (15) en relief et/ou en creux,
- on retire le poinçon (10) de l'empreinte (21) du moule (20), et
- on démoule l'article en verre (1) comportant ledit motif (8) interne en relief et/ou en creux.

2. Procédé de fabrication d'un article en verre creux selon la revendication 1, dans lequel l'article en verre comprend un corps (2) déterminant un contenant délimité par la paroi (3) et un fond (4), le corps (2) comportant une partie supérieure opposée au fond(4) et munie d'une bague (5), dans lequel le moule comporte à sa partie supérieure un orifice d'introduction d'au moins une goutte de verre, et dans lequel le moule comprend un orifice (24) pour le passage du poinçon (10) et, au-dessous de l'orifice (24), un moule de bague (25), et dans lequel le moule de bague (25) forme la bague (5).

3. Procédé de fabrication d'un article en verre creux selon la revendication 2, dans lequel le moule de bague est muni d'un orifice central (26) pour le passage du poinçon.

4. Procédé de fabrication d'un article en verre creux selon la revendication 3, dans lequel le moule de bague (25) porte intérieurement un manchon (27) de guidage du poinçon (10), et dans lequel on déplace le poinçon (10) entre une position passive dans laquelle la paroi d'extrémité (13a) du poinçon (10) obture l'orifice central (26) et une position active dans laquelle le poinçon (10) est en saillie dans l'empreinte (21) du moule (20) afin de former l'article (1).

5. Dispositif de fabrication d'un article en verre (1) creux, comme par exemple un flacon ou un pot, pour la mise en oeuvre du procédé selon la revendication 1, **caractérisé en ce qu'**il comprend :
- un moule (20) comportant une empreinte (21) de forme correspondant sensiblement à la forme extérieure de l'article en verre (1),
- un moyen de déposer dans l'empreinte (21) au moins une goutte de verre, et
- un poinçon (10) **caractérisé en ce qu'**il comprend un corps (11) comportant sur au moins une face latérale externe au moins un motif (15) en relief et/ou en creux présentant une forme localement en contre-dépouille,
le poinçon (10) étant déplaçable entre une position passive à l'extérieur de l'empreinte (21) et une position active à l'intérieur de cette empreinte (21).

6. Dispositif de fabrication d'un article en verre (1) creux selon la revendication 5, dans lequel le corps (11) du poinçon comprend une partie d'extrémité (13) de forme générale tronconique, la partie d'extrémité (13) comportant sur au moins une face latérale externe au moins le motif (15) en relief et/ou en creux.

7. Dispositif de fabrication d'un article en verre (1) creux selon la revendication 6, dans lequel la partie d'extrémité (13) se termine par une paroi d'extrémité (13a).

8. Dispositif de fabrication d'un article en verre (1) creux selon la revendication 5, dans lequel le corps (11) du poinçon comprend une partie d'extrémité (13) de section progressivement décroissante vers une paroi d'extrémité (13a).

9. Dispositif de fabrication d'un article en verre (1) creux selon la revendication 8, dans lequel la partie d'extrémité (13) comporte sur au moins une face latérale externe au moins le motif (15) en relief et/ou en creux.

10. Dispositif de fabrication d'un article en verre (1) creux selon l'une des revendications 7 à 9, dans lequel la paroi d'extrémité (13a) comporte également un motif (15) en relief et/ou en creux.

11. Dispositif de fabrication d'un article en verre (1) creux selon l'une des revendications 7 à 10, dans lequel le motif (15) en relief et/ou en creux présentant une forme localement en contre-dépouille présente au moins une surface dont la normale est orientée à l'opposé de la paroi d'extrémité (13a).

12. Dispositif de fabrication d'un article en verre (1) creux selon l'une des revendications 7 à 11, dans lequel, localement, au niveau de la contre-dépouille, le motif est de section progressivement croissante vers la paroi d'extrémité (13a).

13. Dispositif de fabrication d'un article en verre (1) creux selon l'une quelconque des revendications 5 à 12, dans lequel le corps (11) du poinçon (10) comporte une forme extérieure rectangulaire, carrée ou ovoïde.

14. Dispositif de fabrication d'un article en verre (1) creux selon la revendication 5 à 13, **caractérisé en ce que** la partie d'extrémité (13) comporte un angle de dépouille (α) compris entre 2 degrés et 15 degrés, de préférence un angle de dépouille (α) compris entre 2 degrés et 10 degrés, et de manière encore plus préférée un angle de dépouille (α) de l'ordre de 5 degrés par rapport à l'axe de la partie d'extrémité (13).

15. Dispositif de fabrication d'un article en verre (1) creux selon l'une des revendications 5 à 14, dans lequel le poinçon (10) comporte intérieurement un élément de refroidissement.

## Patentansprüche

1. Verfahren zur Herstellung eines hohlen Glasgegenstandes (1), wie zum Beispiel ein Glasfläschchen oder eine Kanne, **dadurch gekennzeichnet, dass** es aus den folgenden Schritten besteht:
- Einbringen von mindestens einem Glastropfen in einen Hohlraum (21) einer Form (20),
- Einführen eines Stempels (10), welcher mindestens ein erhabenes und/oder hohles Motiv (15) aufweist, welches eine Form von lokaler Hinterschneidung aufweist, in den Hohlraum (21) der Form (20),
- Bilden des Glasgegenstandes (1) mittels dieses Stempels (10) und gleichzeitiges Prägen mindestens eines erhabenen und/oder hohlen Motivs (8), welches durch das mindestens eine erhabene und/oder hohle Motiv (15) gebildet wird, auf einer inneren Fläche (6) von mindestens einer Wand (3) des Gegenstandes (1),
- Entnehmen des Stempels (10) aus dem Hohlraum (21) der Form (20), und
- Entnehmen des Glasgegenstandes (1) aus der Form, welcher das innere, erhabene und/oder hohle Motiv (8) aufweist.

2. Verfahren zur Herstellung eines hohlen Glasgegenstandes nach Anspruch 1, bei welchem der Glasgegenstand einen Körper (2) aufweist, welcher durch die Wand (3) und einen Boden (4) einen abgegrenzten Behälter festlegt, wobei der Körper (2) einen oberen Teil aufweist, der dem Boden (4) gegenüber liegt und mit einem Ring (5) versehen ist, bei welchem die Form an ihrem oberen Teil eine Öffnung zum Einführen von mindestens einem Glastropfen aufweist, und bei welchem die Form eine Öffnung (24) für den Durchlass des Stempels (10) und oberhalb der Öffnung (24) eine Randform (25) aufweist, und bei welcher die Randform (25) den Ring (5) bildet.

3. Verfahren zur Herstellung eines hohlen Glasgegenstandes nach Anspruch 2, bei welchem die Randform mit einer zentralen Öffnung (26) für den Durchlass des Stempels versehen ist.

4. Verfahren zur Herstellung eines hohlen Glasgegenstandes nach Anspruch 3, bei welchem die Randform (25) eine Muffe (27) zur Führung des Stempels (10) trägt, bei welchem der Stempel (10) zwischen einer passiven Position, in welcher das Wandende (13a) des Stempels (10) die zentrale Öffnung (26) verschließt, und einer aktiven Position bewegt wird, in welcher der Stempel (10) in den Hohlraum (21) der Form (20) vorsteht, um den Gegenstand (1) zu verformen.

5. Vorrichtung zur Herstellung eines hohlen Glasgegenstandes (1), wie zum Beispiel ein Glasfläschchen oder eine Kanne, zur Durchführung des Verfahrens nach Anspruch 1, **dadurch gekennzeichnet, dass** sie Folgendes aufweist:
- eine Form (20), welche einen Hohlraum (21) von einer Form aufweist, welche im Wesentlichen der äußeren Form des Glasgegenstandes (1) entspricht,
- ein Mittel, um mindestens einen Glastropfen in den Hohlraum (21) einzubringen, und
- einen Stempel (10), **dadurch gekennzeichnet, dass** er einen Körper (11) aufweist, welcher an mindestens einer äußeren, seitlichen Fläche mindestens ein erhabenes und/oder hohles Motiv (15) aufweist, welches eine Form von lokaler Hinterschneidung aufweist,
wobei der Stempel (10) zwischen einer passiven Position außerhalb des Hohlraums (21) und einer aktiven Position im Inneren dieses Hohlraums (21) bewegbar ist.

6. Vorrichtung zur Herstellung eines hohlen Glasgegenstandes (1) nach Anspruch 5, bei welcher der Körper (11) des Stempels ein allgemeines kegelstumpfförmiges Endteil (13) aufweist, wobei das Endteil (13) an mindestens einer äußeren seitlichen Fläche mindestens ein erhabenes und/oder hohles Motiv (15) aufweist.

7. Vorrichtung zur Herstellung eines hohlen Glasgegenstandes (1) nach Anspruch 6, bei welcher das Endteil (13) durch eine äußere Endwand (13a) endet.

8. Vorrichtung zur Herstellung eines hohlen Glasgegenstandes (1) nach Anspruch 5, bei welcher der Körper (11) des Stempels ein Endteil (13) mit einen in Richtung einer Endwand (13a) allmählich abnehmendem Querschnitt aufweist.

9. Vorrichtung zur Herstellung eines hohlen Glasgegenstandes (1) nach Anspruch 8, bei welcher das Endteil (13) an mindestens einer äußeren, seitlichen Fläche mindestens das erhabene und/oder hohle Motiv (15) aufweist.

10. Vorrichtung zur Herstellung eines hohlen Glasgegenstandes (1) nach einem der Ansprüche 7 bis 9, bei welcher die Endwand (13a) ebenfalls ein erhabenes und/oder hohles Motiv (15) aufweist.

11. Vorrichtung zur Herstellung eines hohlen Glasgegenstandes (1) nach einem der Ansprüche 7 bis 10, bei welcher das erhabene und/oder hohle Motiv (15), welches eine Form von lokaler Hinterschneidung aufweist, mindestens eine Fläche aufweist, deren Normale entgegengesetzt zu der Endwand (13a) orientiert ist.

12. Vorrichtung zur Herstellung eines hohlen Glasgegenstandes (1) nach einem der Ansprüche 7 bis 11, bei welcher das Motiv lokal, im Bereich der Hinterschneidung einen in Richtung der Endwand (13a) allmählich zunehmenden Querschnitt aufweist.

13. Vorrichtung zur Herstellung eines hohlen Glasgegenstandes (1) nach einem der Ansprüche 5 bis 12, bei welcher der Körper (11) des Stempels (10) eine äußere rechteckige, quadratische oder ovale Form aufweist.

14. Vorrichtung zur Herstellung eines hohlen Glasgegenstandes (1) nach einem der Ansprüche 5 bis 13, **dadurch gekennzeichnet, dass** das Endteil (13) einen Freiwinkel (α) aufweist, welcher zwischen 2 Grad und 15 Grad liegt, vorzugsweise einen Freiwinkel (α), welcher zwischen 2 Grad und 10 Grad liegt, und besonders bevorzugt einen Freiwinkel (α) in der Größenordnung von 5 Grad, in Bezug auf die Achse des Endteils (13).

15. Vorrichtung zur Herstellung eines hohlen Glasgegenstandes (1) nach einem der Ansprüche 5 bis 14, bei welcher der Stempel (10) ein inneres Kühlelement aufweist.

## Claims

1. A method of manufacturing a hollow glass article (1), such as a bottle or a jar, **characterised in that** it consists in the steps of:
- placing, in a cavity (21) of a mould (20), at least one drop of glass,
- inserting, in the cavity (21) of the mould (20), a punch (10) including at least one raised and/or hollow pattern (15) with a shape which is locally back-draft,
- forming, by using this punch (10), the glass article (1) and simultaneously imprinting, on an inner surface (6) of at least one wall (3) of said article (1), at least one raised and/or hollow pattern (8) formed by the at least one raised and/or hollow pattern (15),
- removing the punch (10) from the cavity (21) of the mould (20), and
- stripping the glass article (1) which includes said inner raised and/or hollow pattern (8).

2. The method of manufacturing a hollow glass article according to Claim 1, wherein the glass article comprises a body (2) defining a container delimited by the wall (3) and a bottom (4), the body (2) including an upper portion opposite to the bottom (4) and provided with a ring (5), wherein the mould includes, at its upper portion, an opening for introducing at least one drop of glass, and wherein the mould comprises an opening (24) for passage the punch (10) and, below the opening (24), a ring mould (25), and wherein the ring mould (25) forms the ring (5).

3. The method of manufacturing a hollow glass article according to Claim 2, wherein the ring mould is provided with a central opening (26) for the passage of the punch.

4. The method of manufacturing a hollow glass article according to Claim 3, wherein the ring mould (25) inwardly bears a guide sleeve (25) for guiding the punch (10), and wherein the punch (10) is moved between a passive position wherein the end wall (13a) of the punch (10) closes off the central opening (26) and an active position wherein the punch (10) protrudes in the cavity (21) of the mould (20) so as to form the article (1).

5. A device for manufacturing a hollow glass article (1), such as a bottle or a jar, for implementing the method according to Claim 1, **characterised in that** it comprises:
- a mould (20) including a cavity (21) having a shape corresponding substantially to the outer shape of the glass article (1),
- means for placing, in the cavity (21), at least one drop of glass, and
- a punch (10) characterised that it comprises a body (11) including on at least one outside surface at least one raised and/or hollow pattern (15) having a locally backdraft shape,
the punch (10) being movable between a passive position outside the cavity (21) and an active position inside this cavity (21).

6. The device for manufacturing a hollow glass article (1) according to Claim 5,
wherein the body (11) of the punch comprises an end portion (13) having a generally truncated shape, the end portion (13) including at least, on at least one outside surface, the raised and/or hollow pattern (15).

7. The device for manufacturing a hollow glass article (1) according to Claim 6, wherein the end portion (13) ends with an end wall (13a).

8. The device for manufacturing a hollow glass article (1) according to Claim 5, wherein the body (11) of the punch comprises an end portion (13) having a gradually tapering section towards an end wall (13a).

9. The device for manufacturing a hollow glass article (1) according to Claim 8, wherein the end portion (13) includes at least, on at least one inside surface, the raised and/or hollow pattern (15).

10. The device for manufacturing a hollow glass article (1) according to one of Claims 7 to 9,
wherein the end wall (13a) also includes a raised and/or hollow pattern (15).

11. The device for manufacturing a hollow glass article (1) according to one of Claims 7 to 10,
wherein the raised and/or hollow pattern (15) has a locally backdraft shape having at least one surface with a normal direction oriented away from the end wall (13a).

12. The device for manufacturing a hollow glass article (1) according to one of Claims 7 to 11,
wherein, locally, at the back-draft, the pattern has a gradually increasing section towards the end wall (13a).

13. The device for manufacturing a hollow glass article (1) according to any of Claims 5 to 12,
wherein the body (11) of the punch (10) includes a rectangular, square, or ovoid outer shape.

14. The device for manufacturing a hollow glass article (1) according to Claim 5 to 13, **characterised in that** the outer portion (13) includes a clearance angle (α) comprised between 2° and 15°, preferably a clearance angle (α) comprised between 2° and 10°, and even more preferably a clearance angle (α) in the order of 5° with respect to the axis of the outer portion (13).

15. The device for manufacturing a hollow glass article (1) according to one of Claims 5 to 14,
wherein the plunger (10) includes a cooling element inside.
